# EUROPÄISCHE PATENTSCHRIFT

(11) **EP 0 510 457 B1**
(45) Veröffentlichungstag und Bekanntmachung des Hinweises auf die Patenterteilung: **28.12.1994**
(21) Anmeldenummer: 92106219.6
(22) Anmeldetag: 10.04.1992
(51) Int. Cl.: B60K 23/08, F16D 25/14

(54) **Formschlüssige Kupplung für Verteilergetriebe und Ausgleichsgetriebe von Kraftfahrzeugen, Verteilergetriebe und Ausgleichsgetriebe mit solchen Kupplungen und Verfahren zu deren Betätigung**
Form-fitting coupling for transfer gear and differential unit of a motor vehicle, transfer gear and differential unit having such a coupling, and method of operating same
Accouplement à liaison de forme pour la boîte de transfert et le différentiel d'un véhicule à moteur, boîte de transfert et différentiel pourvus dudit accouplement, et sa méthode d'operation

(30) Priorität: 22.04.1991 DE 4113128
(43) Veröffentlichungstag der Anmeldung: 28.10.1992
(73) Patentinhaber: STEYR-DAIMLER-PUCH AKTIENGESELLSCHAFT, 1010 Wien (AT)
(72) Erfinder: Leitner, Max, A-4400 Steyr (AT); Frühwirth, Gerhard, Josef, Dipl.-Ing., A-4274 Schönau Nr. 50 (AT)

(56) Entgegenhaltungen:
- EP-A- 0 035 324
- EP-A- 0 256 746
- EP-A- 0 410 441
- FR-A- 2 311 961
- US-A- 4 699 235

## Beschreibung

Die Erfindung handelt von einer Kupplung mit einer von einem Stellglied axial verschiebbaren Kupplungsteil und einer auf das Stellglied wirkenden Steuereinheit, bei der der getriebene Kupplungsteil mit einem ersten Radantriebsstrang treibend verbunden ist und der treibende Kupplungsteil mit einem Hauptantriebsstrang und einem zweiten Radantriebsstrang in Verbindung steht.

Bei schweren Kraftfahrzeugen, insbesondere bei Lastkraftwagen oder Traktoren sind sehr hohe Drehmomente zu übertragen, was bei der Verwendung von Reibungskupplungen sehr große und teure Konstruktionen erforderlich macht. Bei Kraftfahrzeugen mit zuschaltbarem Vorderradantrieb oder zuschaltbaren Sperren für Ausgleichsgetriebe, wobei es sich sowohl um Achsdifferentiale als auch um Zentraldifferentiale handeln kann, werden zur Vermeidung weiterer großer Reibungskupplungen formschlüssige Kupplungen verwendet.

Diese Kupplungen haben jedoch den großen Nachteil, daß sie im Stillstand meist gar nicht, und während der Fahrt nur von einem sehr geübten Fahrer schaltbar sind. Dabei müssen die beiden Kupplungsteile bei geringer Drehzahldifferenz gefühlvoll in Eingriff gebracht werden, meist schon bevor das Fahrzeug schwieriges Gelände erreicht, in dem auf Vierradantrieb umzuschalten, bzw. die Differentialsperre einzuschalten ist, wodurch sich der Reifenverschleiß erhöht. Auch das Ausrücken ist schwer, weil dabei bisweilen erhebliche drehmomentbedingte Reibungskräfte zwischen den Klauen der auseinanderzuziehenden Kupplungsteile zu überwinden sind. Oft wird eine Feder verwenet, um den Kraftaufwand beim Auskuppeln zu vermindern, jedoch erhöht sich dadurch wieder der Kraftaufwand beim Einkuppeln. Deshalb wird der Allradantrieb oder die Differentialsperre oft länger als notwendig eingeschaltet gelassen, und bisweilen vergessen, was bei Straßenfahrt auch zu Lenkschwierigkeiten führt.

Deshalb werden heute oft hydraulische oder pneumatische Kraftverstärker oder gar elektrische Elemente als Stellglieder verwendet. Durch die Notwendigkeit des gefühlvollen Einrückens ist auch eine automatische Einrückung aufwendig.

Diese Stellglieder müssen doppeltwirkend und sehr groß dimensioniert sein, um die Kupplung einrücken, während der Fahrt eingerückt halten und dann auch wieder ausrücken zu können. Das bedingt hohen Energieverbrauch, bei hydraulischer oder pneumatischer Betätigung wegen der Leckagen, die ein dauerndes Laufen der Öl- oder Luftpumpe erforderlich machen und bei elektrischen Stellgliedern außerdem durch deren thermische Verluste.

Aus der DE-OS 40 21 653 ist es zwar bekannt, zur Verringerung der Betätigungskräfte die Kontaktflächen der Kupplung gegen die Achsrichtung zu neigen. Dabei treten aber erhebliche und permanente Axialkräfte auf, die durch eine Verriegelungsvorrichtung aufgefangen werden, die Bauraum in Anspruch nimmt und eine höhere Anzahl von Teilen mit sich bringt. Es ist aber noch immer eine, wenn auch nur geringe, Haltekraft erforderlich und das Drehmoment öffnet die Kupplung zwar selbsttätig, aber erst nach Aufbringen einer Lösekraft mit einiger Verzögerung.

Will man die Kupplung aber vollautomatisch einrücken, besteht ein weiteres Problem darin, daß als Einrückkriterium fahrzeugseitig der Schlupf der angetriebenen Räder, und kupplungsseitig die Drehzahldifferenz zwischen den beiden Kupplungsteilen, von der ja die Möglichkeit des Einrückens ohne Stillstand des Fahrzeuges abhängt, maßgebend sind; als Ausrückkriterium aber das auf die Kupplung wirkende Drehmoment.

Wenn die Kupplung eingerückt ist, sind die jeweiligen Antriebsstränge starr verbunden, sodaß als Kriterium zum wieder Ausrücken keine Drehzahldifferenz zwischen den Kupplungsteilen zur Verfügung steht. Die Messung von Drehmomenten ist aber nicht nur aufwendig, sondern viel zu ungenau, um ein Ausrücken bei einem bestimmten Drehmoment sicherzustellen. Das automatische Ausrücken ist auch problematisch, weil es gegen die Reibung zwischen den durch das übertragene Moment gegeneinander gepreßten Kupplungsflächen erfolgen muß, wobei durch die Elastizitäten in den Antriebssträngen auch Schwingungen auftreten, sodaß in der Fahrpraxis Defekte nicht selten sind.

Die geschilderten Nachteile und Probleme ergeben sich ebenso für die Sperre von Achsdifferentialen wie für die Sperre von Zwischenachsdifferentialen, wie sie in den aufwendigeren Verteilergetrieben verwendet werden und ebenso für die starre Zuschaltung des Vorderachsantriebes bei weniger aufwendigen Verteilergetrieben.

Es ist Ziel der vorliegenden Erfindung, eine formschlüssige Kupplung einschließlich ihrer Betätigungseinrichtung so zu verbessern, daß ohne mechanischen Mehraufwand die geschilderten Probleme vermieden werden, also eine Kupplung zu schaffen, die sich zum richtigen Zeitpunkt selbsttätig aus- und einschaltet.

Diese Aufgabe wird erfindungsgemäß durch die kennzeichnenden Merkmale des ersten Anspruches gelöst. Durch das Zusammenwirken der an sich bekannten Kupplungsbauweise mit in Umfangsrichtung wirkenden Flanken als Klauenkupplung oder als Zahnkupplung mit einer genau bemessenen Federkraft bleibt die einmal eingerückte Kupplung nur durch die Übertragung eines Drehmomentes eingerückt und wird erst bei Unterschreiten eines bestimmten Drehmomentes durch die Feder ausgerückt. Es ist somit durch die Feder ohne besonderen technischen Aufwand und ohne Ausrücksteuerung ein zuverlässiges Ausrücken gewährleistet. Die Steuereinheit kann so auf das Einrücken beschränkt bleiben (wenn sie das Stellglied auch festhalten soll, würde sie ja auch ein Ausrückkriterium brauchen, um es nicht dauernd festzuhalten) und die Drehzahlsensoren an den beiden Kupplungsteilen bzw. den damit verbundenen Strängen ermöglichen das Einrücken der Kupplung im richtigen Moment nach einem einheitlichen, zuverlässigen Einrückkriterium, den vorgegebenen Schwellenwerten der Drehzahldifferenz zwischen den Kupplungsteilen.

Diese Schwellenwerte liegen bei jenen Drehzahldifferenzen, bei denen die formschlüssigen Kupplungsteile noch gut in Eingriff gebracht werden können und entsprechen der Drehzahldifferenz bei Durchrutschen eines Rades, liegen aber über der Drehzahldifferenz bei eingeschlagener Lenkung. Es ist also kein Lenkwinkelsensor mit zusätzlicher Logik erforderlich.

Die derartige Bemessung der Kraft der Feder, daß sie im Wesentlichen (das, weil sie auch Reibung und Trägheit des Einrückgliedes überwinden muß) gleich der Reibungskraft bei einem sehr geringen übertragenen Drehmoment ist, bedeutet, daß sie unmittelbar und verzögerungsfrei auf einen Nulldurchgang des Momentes reagiert, wobei das sehr geringe Grenzmoment (positiv und negativ genommen) ein Intervall um den Nulldurchgang bildet. Beim bisher angestrebten gesteuerten Ausrücken wäre, abgesehen von der Schwierigkeit der Drehmomentmessung, die Gleichzeitigkeit von Nulldurchgang und Beaufschlagung des Stellgliedes nicht zu erreichen. Wenn sich die Kupplung jedoch ausnahmsweise dann löst, wenn sie es nicht soll, bewirkt die Einrücksteuerung ein sofortiges Wiedereinrücken der Kupplung.

Somit führt erst die Kombination von selbsttätigem Ausrücken und Einrücken bei Überschreiten der Schwellen der Drehzahldifferenz zu einer praktikablen Lösung des der Erfindung zugrundeliegenden Problemes.

Bei dieser verblüffend einfachen Lösung wurde ausserdem mit dem Vorurteil gebrochen, daß schwellenwertabhängige Schaltvorgänge nicht sich selbst überlassen bleiben dürfen. Sie hat sich aber überraschenderweise im Fahrversuch außerordentlich gut bewährt. Auch in Situationen, in denen es zu erwarten gewesen wäre, z.B. beim Überfahren einer Kuppe oder bei Laststößen, erfolgte kein ungewolltes Ausrücken. Retrospektiv konnte man sich den Erfolg nur mit dem Zusammenwirken der Verspannungen und Elastizitäten in den Antriebssträngen mit den großen Massentragheiten erklären.

Beim Einsatz einer Kupplung mit in axialer Richtung vorstehenden Klauen können zur Erleichterung des automatischen Einrückens in einem weiteren Bereich der Drehzahldifferenz die Mitnehmer der beiden Kupplungsteile Stirnflächen mit geneigten Anlaufflächen aufweisen (Anspruch 2).

Bei Fahrzeugen, bei denen geringere Verspannungskräfte und Trägheitskräfte auftreten, konnte verfrühtes selbsttätiges Ausrücken der Kupplung dadurch vermieden werden, daß die Flanken der Mitnehmer von in Umfangsrichtung um einen sehr kleinen Winkel einwärts geneigten Erzeugenden gebildet sind (Anspruch 3).

Es liegt auch im Bereich der Erfindung, eine Muffenkupplung einzusetzen, was ebenso im Fahrversuch nachgewiesen werden konnte. (Anspruch 4).

Eine konstruktiv vorteilhafte Ausführung wird erreicht, wenn das Einrückglied ein Zylinder mit einer Kolbenstange und einem Kolben ist, der auf einer Seite mit Druckfluid beaufschlagbar ist und auf den auf der anderen Seite eine Druckfeder wirkt (Anspruch 5). Durch diese konstruktive Vereinigung von Zylinder und Feder außerhalb des unmittelbaren Kupplungsbereiches ist gute Zugänglichkeit für Wartungsarbeiten ohne zusätzlichen Raumbedarf im Kupplungsbereich und sogar Nachrüstung der erfindungsgemäßen Vorrichtung möglich.

Eine weitere konstruktive Vereinfachung des Stellgliedes wird dadurch erreicht, daß Kolbenstange und Schaltgabel fest miteinander verbunden und achsparallel verschiebbar geführt sind (Anspruch 6). So kann die Führung der Kolbenstange gleichzeitig als Führung der Schaltgabel dienen und die Schaltgabel braucht nicht schwenkbar gelagert zu sein.

In einer vorteilhaften Gestaltung der Erfindung umfaßt die Steuereinheit in Signalflußrichtung einen zwei Umsetzer für die beiden Drehzahlsignale und einen Summierer zur Bildung eines Differenzsignales aus den beiden Drehzahlsignalen aufweisenden Signalverarbeitungsteil, einen Logikteil, eine Ablaufsteuerung und eine Verstärkerstufe für das Stellglied (Anspruch 7). Durch diese Struktur der Steuereinheit ist die Gewinnung eines Drehzahldifferenzsignales unabhängig von der besonderen Anordnung oder Anwendung der Kupplung, eine zuverlässige und mit Kontrollfunktionen abgesicherte Entscheidung über das Einrücken der Kupplung auf Grund der Drehzahldifferenz der Kupplungsteilen, sowie ein zuverlässiges und allen Fahrzuständen Rechnung tragendes Einrücken der Kupplung zu erreichen.

Wenn in Ausgestaltung der Erfindung im Signalverarbeitungsteil zwischen mindestens einem Umsetzer und dem Summierer ein Rechenglied zur Übersetzungskorrektur angeordnet ist (Anspruch 8), ist man in der Anordnung der Sensoren frei. Der erste Sensor kann irgendwo am ersten Radantriebsstrang angebracht sein. Der zweite Sensor kann im Falle eines Verteilergetriebes irgendwo am Hauptantriebsstrang oder am zweiten Radantriebsstrang angeordnet sein, weil das Rechenglied die jeweiligen Übersetzungsverhältnisse berücksichtigt. Bei Ausgleichsgetrieben kann die gesuchte Drehzahl einfach additiv ermittelt werden.

In weiterer Ausgestaltung der Erfindung weist der Logikteil mindestens einen ersten Komparator zum Vergleich des Drehzahldifferenzsignales mit vorgegebenen Schwellenwerten auf, dessen Ausgangssignal auf ein UND-Gatter wirkt (Anspruch 9). Die Logik stellt somit sicher, daß ein Einrücken der Kupplung nur in einem bestimmten, der Bauart der Kupplung angepaßten, Bereich der Drehzahldifferenz erfolgen kann.

In einer bevorzugten Ausgestaltung der Erfindung ist je ein Fensterkomparator und je ein Beschleunigungskomparator für positive und für negative Drehzahldifferenzen über je ein UND-Glied und ein gemeinsames ODER-Glied auf das UND-Gatter geschaltet (Anspruch 10). Dadurch kann zwischen Fahrzuständen mit positiver und solchen mit negativer Drehzahldifferenz unterschieden werden und es ist möglich, in Abhängigkeit vom Signum der Beschleunigung (positive oder negative Beschleunigung) gewisse Einrückschwellen zu übergehen.

Weiters kann der Logikteil mindestens einen zweiten Komparator zum Vergleich der Drehzahl mindestens einer der Kupplungshälften oder Stränge mit einem vorgegebenen Grenzwert aufweisen und deren Ausgangssignal auch dem UND-Gatter zugeleitet werden (Anspruch 11). Damit wird, zusätzlich zu den Schwellen für die Drehzahldifferenz, auch das Einrücken bei zu hohen Geschwindigkeiten unterbunden.

In weiterer Ausbildung wirken auf das UND-Gatter des Logikteiles noch weitere Sicherheitssignale, durch die ein Einrücken der Kupplung unterbunden werden kann (Anspruch 12), so etwa ein Lenkwinkelsignal oder ein Bremslichtsignal, da ja während des Bremsens und bei stark eingeschlagener Lenkung ein plötzliches Verspannen des Antriebsstranges (durch Zuschalten des Vorderradantriebes oder durch Sperren des Ausgleichsgetriebes) unerwünscht und schädlich ist.

In Weiterbildung der Erfindung weist die Ablaufsteuerung der Steuereinheit ein erstes monostabiles Schaltglied auf (Anspruch 13), das die Dauer der Beaufschlagung des Einrückgliedes bestimmt. Dadurch ist sichergestellt, daß die Kupplung nicht zu Schaden kommt, wenn das Einrücken nicht gelingt.

In einer vorteilhaften Weiterbildung weist die Ablaufsteuerung dann noch ein monostabiles Schaltglied auf, das eingangsseitig mit einem Rückmeldesensor und ausgangseitig mit einem ODER-Gatter verbunden ist, mit dem auch der Ausgang des ersten monostabilen Schaltgliedes verbunden ist (Anspruch 14). Durch eine derartige Schaltung kann der Einrückvorgang automatisch wiederholt werden, bis die Kupplung auch tatsächlich eingerückt ist. Es erfolgt also ganz selbsttätig, was der geübte Fahrer bei Handschaltung intuitiv tut: in kurzen Zeitabständen versuchen, anstatt mit Kraft vorzugehen.

In einer besonders vorteilhaften Weiterbildung der erfindungsgemäßen Vorrichtung ist der mindestens eine erste Komparator ein Komparator mit variablen Schwellenwerten und steht mit einem Fehlerkompensationsrechner in Verbindung (Anspruch 15). Dadurch können die Schwellenwerte für die Drehzahldifferenz, vor allem die, bei denen die Kupplung eingerückt wird, über die gesamte Lebensdauer des Fahrzeuges, z.B. unabhängig von unsymmetrischem Verschleiß der Fahrzeugbereifung, konstant gehalten werden. Der Vorteil dieser Maßnahme ist beträchtlich, denn die wirksamen Reifendurchmesser können sich um einige Prozent unterscheiden und die Drehzahldifferenz, bei der die Kupplung eingerückt werden kann, liegt in derselben Größenordnung.

Die Erfindung handelt auch von einem Verteilergetriebe für Kraftfahrzeuge mit mindestens zwei angetriebenen Achsen, das mit einer erfindungsgemäßen Kupplung mit Stellglied und Steuereinheit ausgerüstet ist (Anspruch 16). Bei einem derartigen Verteilergetriebe ist der axial bewegliche Kupplungsteil mit dem ersten Radantriebsstrang drehfest verbunden und die nicht bewegliche Kupplungsteil mit dem Hauptantriebsstrang. Diese Anordnung ist davon unabhängig, ob es sich um ein Verteilergetriebe mit zuschaltbarem Vorderradantrieb oder um ein Verteilergetriebe mit Zwischenachsdifferential und zuschaltbarer Zwischenachsdifferentialsperre handelt. Jedenfalls ergibt sich bei dieser Anwendung ohne nennenswerten konstruktiven Mehraufwand ein Verteilergetriebe, das alle Vorteile der Erfindung aufweist.

Die Erfindung handelt weiters von einem Achsdifferential für Kraftfahrzeuge, bei dem die erfindungsgemäße Kupplung als Differentialsperre eingesetzt ist (Anspruch 17). Auch dort werden alle Vorteile der Erfindung ohne nennenswerten Bauaufwand erzielt.

Die Erfindung handelt auch noch von einem Verfahren zum Schalten einer Kupplung, das aus folgenden Schritten besteht (Anspruch 18):
a) Ermittlung eines Differenzsignales aus Drehzahlsignalen von zweien der drei Stränge,
b) Einrücken der Kupplung durch auf ein erstes Zeitintervall begrenzte Beaufschlagung des Stellgliedes bei Erreichen einer ersten definierten Schlupfschwelle,
c) Wiederholen der Beaufschlagung des Stellgliedes (20) nach einem zweiten Zeitintervall, wenn das erfolgte Einrücken der Kupplung nicht während des ersten Zeitintervalles rückgemeldet wurde.

Die wesentlichen Vorteile dieses Verfahrens bestehen darin, daß die Kupplung bei der richtigen Schlupf, also optimalen Drehzahldifferenz und daher weitgehend ruckfrei eingerückt wird und daß das ohne Erfolgszwang und daher nur mit geringerer Stellkraft und nur zeitlich begrenzt erfolgen muß, weil weitere Einrückversuche vorgesehen Sind, wenn es beim ersten Mal nicht gelingt. Das kann passieren, wenn die beiden Kupplungsteile genau Zahn gegen Zahn stehen.

Obwohl die Beaufschlagung der Kupplung nach Überschreiten des ersten Schwellenwertes der Drehzahldifferenz in der Regel sehr rasch erfolgt, kann es doch vorkommen, daß die Drehzahldifferenz so schnell ansteigt, daß sie nach einem mißglückten Versuch schon zu hoch ist, um die Kupplung beim zweiten Versuch noch einrücken zu können. Um das zu verhindern, ist die Beaufschlagung des Stellgliedes gesperrt, wenn eine zweite definierte Schwelle der Geschwindigkeitsdifferenz überschritten ist (Anspruch 19).

In Ausgestaltung des erfindungsgemäßen Verfahrens wird die Beaufschlagung des Stellgliedes nach erfolgtem Einrücken der Kupplung erst nach Ablauf eines dritten Zeitintervalles beendet (Anspruch 20). Das Festhalten der Kupplung in der eingerückten Stellung, bevor sie dann nur mehr durch das übertragene Moment festgehalten wird, soll während der Schwingungen im Triebwerk wirken, die durch das Einrücken der Kupplung entstehen können.

In einer Weiterbildung des Verfahrens sind auch negative Schwellen der Drehzahldifferenz definiert (Anspruch 21), die bei sinkender Drehzahldifferenz wirken, also etwa wenn die Drehzahldifferenz zuerst zum Einkuppeln zu schnell angestiegen ist, und nun, nachdem der Fahrer das gemerkt und das Fahrpedal zurückgenommen hat, der Schlupf wieder sinkt. Damit wird vermieden, daß das Fahrzeug nach Überschreiten der zweiten Schwelle stillgesetzt werden muß, was im Gelände sehr unerwünscht ist. Weiters kann so auch bei Bergabfahrt mit Motorbremse, wenn negative Drehzahldifferenzen auftreten, die Kupplung schonend eingerückt werden.

In einer Verfeinerung des erfindungsgemäßen Verfahrens wird bei nicht eingerückter Kupplung aus den Drehzahlsignalen des ersten und zweiten Radantriebstranges, vorzugsweise nur bei geringem Lenkeinschlagwinkel, eine mittlere Drehzahldifferenz ermittelt und die Schwellen werden mit diesem additiv korrigiert (Anspruch 22). Dadurch ist gewährleistet, daß die Schwellen nicht durch Abweichungen der Raddurchmesser verfälscht werden.

Schließlich können in noch weiterer Verfeinerung der Erfindung eine Sperre für die Beaufschlagung des Stellgliedes vorgesehen sein, wenn mindestens ein Sensor das Auftreten eines ungünstigen Fahrzustandes meldet (Anspruch 23).

Im folgenden wird die Erfindung anhand von Abbildungen eines bevorzugten Ausführungs- und mehrerer Anwendungsbeispiele erläutert:
- Fig.1:: Verteilergetriebe mit der erfindungsgemäßen Klauenkupplung,
- Fig.2:: Verteilergetriebe mit der erfindungsgemäßen Klauenkupplung in abgewandelter Form,
- Fig.3:: Achsdifferential mit der erfindungsgemäßen Klauenkupplung,
- Fig.4:: Detail A aus Fig.1, vergrößert,
- Fig.5:: Detailansicht nach B in Fig.4, weiter vergrößert,
- Fig.6:: Blockschaltbild der Steuereinheit,
- Fig.7:: Ablaufschaubild zur Steuereinheit,
- Fig.8:: Diagramm, das die Drehzahldifferenz-Schwellen zeigt,
- Fig.9:: Ausschnitt aus Fig.1 mit einer formschlüssigen Kupplung einer anderen Bauart.

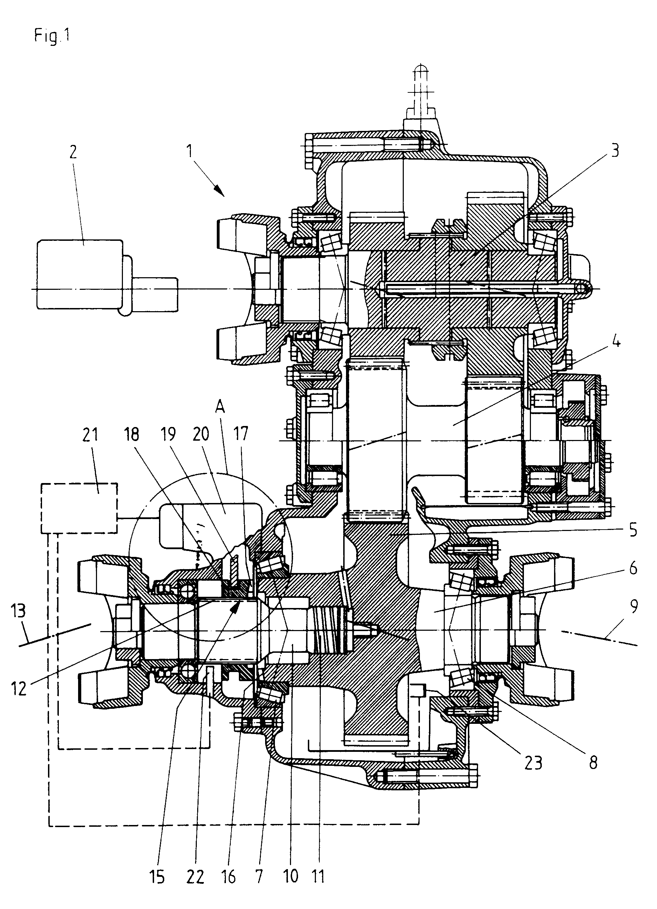

Fig. 1 zeigt ein allgemein mit 1 bezeichnetes Verteilergetriebe, das von einer nur symbolisch dargestellten Motorgetriebeeinheit 2 angetrieben wird. Es enthält eine Eingangswelle 3, eine Zwischenwelle 4 und ein Antriebszahnrad 5, das Teil einer Antriebswelle 6 ist, die in Lagern 7,8 gelagert ist. Eingangswelle 3, Zwischenwelle 4 und Antriebszahnrad 5 bilden den Hauptantriebsstrang.

In der Antriebswelle 6 ist im Gleitlager 11 eine Vorderachsantriebswelle 10 gelagert, die in bekannter und üblicher Weise außerhalb des Verteilergetriebes über ein nicht bezeichnetes Kardangelenk die nicht dargestellte Vorderachse antreibt. Mit der Vorderachsantriebswelle 10 beginnt der allgemein mit 13 bezeichnete erste Radantriebsstrang. Auf der Seite des Lagers 8 geht die Antriebswelle 6 über ein nicht bezeichnetes Kardangelenk in den zweiten Radantriebsstrang über, der zur nicht dargestellten Hinterachse führt und diese einschließt.

In dem dargestellten Beispiel ist der zweite Radantriebsstrang immer angetrieben, daß heißt permanent und fest mit dem Hauptantriebsstrang in Verbindung. Der erste Radantriebsstrang 13 wird nur angetrieben, wenn eine allgemein mit 15 bezeichnete formschlüssige Kupplung, im vorliegenden Ausführungsbeispiel eine Klauenkupplung, eingerückt ist. Diese Klauenkupplung besteht aus einer erstem Kupplungsteil 16, der Teil der Antriebswelle 6 ist und aus einem zweiten Kupplungsteil 17, der als Schiebemuffe 18 ausgebildet ist und mittels einer Schaltgabel 19 eingerückt werden kann. Dazu ist ein Einrückglied 20 vorgesehen, das von einer Steuereinheit 21 aus gesteuert wird. Weiters sind noch Drehzahlsensoren 22,23 von bekannter Bauart und wie für ähnliche Zwecke gebräuchlich, vorgesehen, deren Ausgangssignale der Steuereinheit 21 zugeleitet werden. Der Drehzahlsensor 22 erfaßt dabei die Drehzahl der Vorderachsantriebswelle 10 an dem Keilwellenprofil 12, auf dem die Schiebemuffe 18 drehfest geführt ist und der Sensor 23 mißt die Drehzahl der Antriebswelle 6, indem er die Zähne des Antriebszahnrades 5 abtastet. Dazu ist er an geeigneter Stelle im Gehäuse (in Fig.1 nur halb verdeckt erkennbar) angebracht.

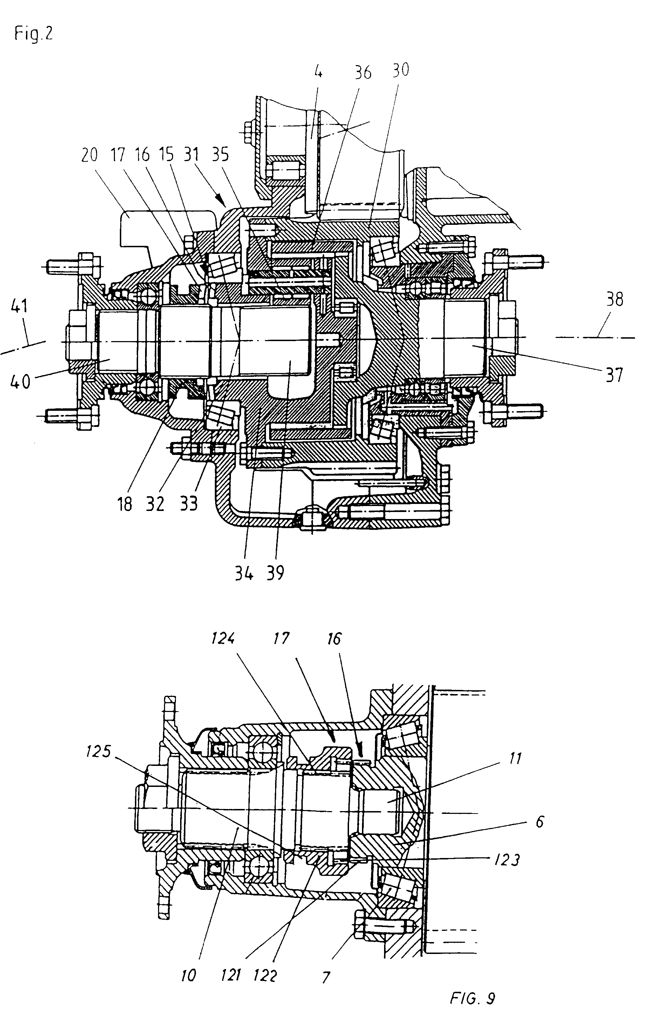

Fig.2 zeigt eine Abwandlung des unter Fig.1 dargestellten Verteilergetriebes, die sich vom letzteren dadurch unterscheidet, daß sie ein Zwischenachsdifferential 31 enthält und dadurch permanenten Allradantrieb über ein Zwischenachsdifferential 31 ermöglicht, das sperrbar ist. Deshalb haben mit der Fig. 1 identische Teile dieselben Bezugszeichen.

Das von der Zwischenwelle 4 aus angetriebene Antriebszahnrad 30 bildet den Korb des Zwischenachsdifferentiales 31 und gleichzeitig den Planetenträger 34. Es weist eine Manschette 32 auf, die in einem Kegelrollenlager 33 gelagert ist. In dem Planetenträger 34 sind Planetenräder 35 gelagert, die außen in das Hohlrad 36 eingreifen, das Teil der Hinterachsantriebswelle 37 ist, mit der, symbolisch mit 38 bezeichnet, der zweite Radantriebsstrang beginnt. An der Innenseite greifen die Planetenräder 35 in das Sonnenrad 39 ein, das Teil der Vorderachsantriebswelle 40 ist, mit der der symbolisch mit 41 bezeichnete erste Radantriebsstrang beginnt. Die Manschette 32 bildet die erste Kupplungsteil 16, die zweite Kupplungsteil 17 ist Teil der Schiebemuffe 18.

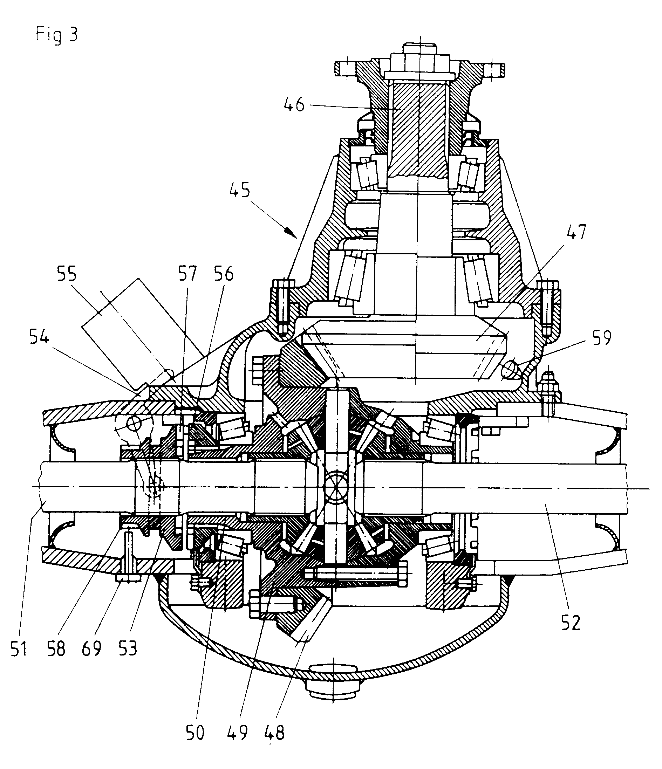

Fig.3 zeigt ein allgemein mit 45 bezeichnetes Achsdifferential, das über eine Antriebswelle 46, die beispielsweise mit einer nicht dargestellten Gelenkwelle mit einem Verteilergetriebe nach Fig.1 oder Fig.2 verbunden sein könnte. Die Antriebswelle 46 ist hier Teil des Hauptantriebsstranges. Ein Triebling 47 treibt ein Tellerrad 48, das am Differentialkorb 49 befestigt ist. Dieser endet in einer Sperrmanschette 50. Aus dem Differentialkorb tritt links die linke Halbachse 51 und rechts die rechte Halbachse 52 aus und diese bilden einen ersten und einen zweiten Radantriebsstrang. Auf der linken Halbachse 51 sitzt eine Schiebemuffe 53, die über einen strichliert angedeuteten Winkelhebel 54 von einem Einrückglied 55 verschoben wird. Auf der Sperrmanschette 50 befindet sich die erste Kupplungsteil 56 (sie ist aus Montagegründen von dieser getrennt), auf der Schiebemuffe 53 der zweite Kupplungsteil 57. Die Schiebemuffe ist an ihrem äußeren Umfang teilweise mit einer Verzahnung 58 für einen Drehzahlsensor 69 versehen. Ein zweiter Drehzahlsensor 59 tastet den Triebling 47 ab und ist dazu an geeigneter Stelle im Gehäuse befestigt.

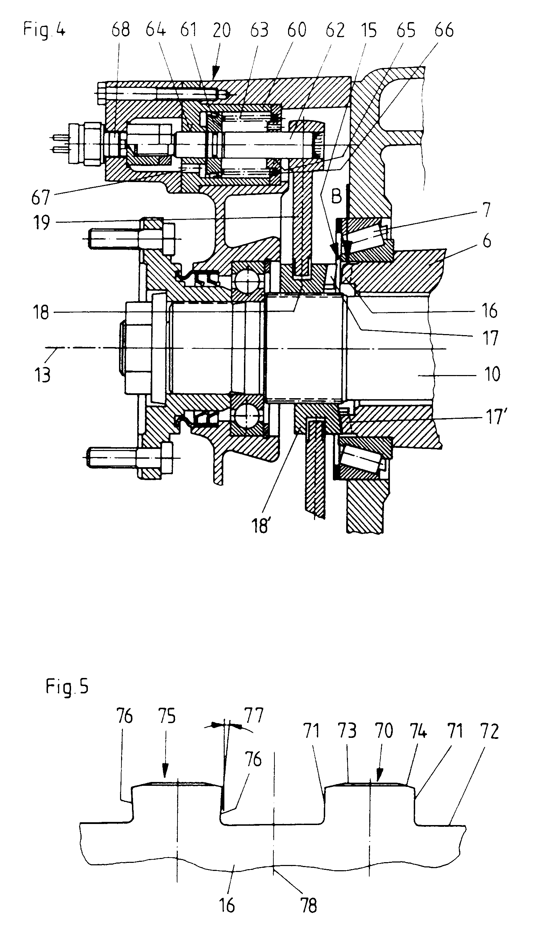

Zu Fig.4 ist die Kupplung 15, die den drei oben beschriebenen Getrieben gemeinsam ist, genauer dargestellt. Dabei ist an der Antriebswelle 6 die erste, axial nicht verschiebbare Kupplungsteil 16 ausgebildet, an der Vorderachsantriebsachse 10 die Schiebemuffe 18 und die Schaltgabel 19, in der oberen Bildhälfte in ausgerückter Stellung.

Ebensogut könnte aber eine formschlüssige Kupplung von dem in Fig.9 dargestellten Typ Verwendung finden. Bei dieser tragen gleiche Teile dieselben Bezugszeichen wie in Fig.1. Sie unterscheidet sich dadurch, daß die Antriebswelle 6 hier einen Kupplungsteil mit einem Aussenprofil an seinem Umfang aufweist, das aus Klauen oder Zähnen 121 bestehen kann. Die Vorderachsantriebswelle 10 tragt auf einer Keilnutenverzahnung 124 eine Schiebemuffe 122, die ein nach innen gerichtetes Profil aufweist, das aus entsprechenden Klauen oder Zähnen 123 besteht. Auch die Schiebemuffe 122 verfügt über eine Umfangsnut 125, in die die Schaltgabel der in Fig.1 dargestellten Einrückvorrichtung eingreift.

Das Einrückglied 20 (wieder Fig.4) enthält im wesentlichen einen Kolben 61 mit Kolbenstange 62 und einen Fluidzylinder 60, dessen Speiseleitungen nicht dargestellt sind. Am vorderen Ende der Kolbenstange 62 ist die Schaltgabel 19 befestigt, an ihrem anderen Ende der Rückmeldesensor 68. Die Kolbenstange 62 ist in Führungen 64,65 des Fluidzylinders 60 geführt.

Wesentlich ist, daß der Kolben 61 nur auf einer (in diesem Fall der linken) Seite mit Druckfluid beaufschlagbar ist und auf der anderen Seite eine Druckfeder 63 auf ihn wirkt, die sich auf der Führung 65 der Kolbenstange abstützt. Der Fluidzylinder 60 ist somit einfachwirkend und wird nur bei Druckbeaufschlagung nach rechts bewegt, sonst aber von der Feder 63 nach links gedrückt. Das ist die Ruhestellung, in der die Kupplung 15 ausgerückt ist. Die eingerückte Stellung der Kupplung ist in der unteren Bildhälfte zu sehen, wobei die entsprechenden Teile mit 17',18' bezeichnet sind.

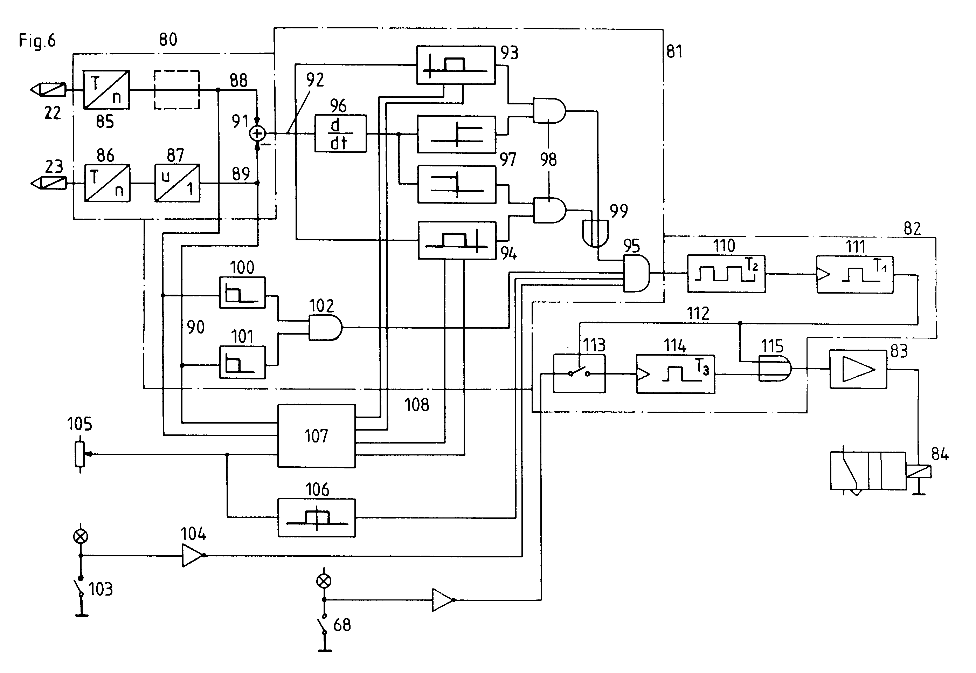

In Fig.5 sind noch stärker vergrößert die Mitnehmer der erfindungsgemäßen Kupplung dargestellt. Mit 70 ist ein Mitnehmer in einer bevorzugten Ausführungsform bezeichnet. Er weist seitlich Flanken 71 auf, deren Erzeugenden in Richtung der Achse 78 verlaufen. In radialer Richtung können diese Flanken, je nach Fertigungsverfahren eben oder gekrümmt sein. Die Stirnfläche 73 kann, ebenso wie die Grundfläche 72 in einer achsnormalen Ebene liegen oder, wie beispielsweise in Fig. 4 zu sehen, auf einer sehr stumpfen Kegelfläche liegen. An der Stirnfläche 73 sind Anlaufflächen 74 ausgebildet, die das Einrücken der Kupplung bei Relativbewegung zwischen den beiden Kupplungsteilen 16,17 erleichtern. In einer für manche Anwendungsfälle abgewandelten Ausführung weist ein Mitnehmer 75 um einen kleinen Winkel 77 einwärts geneigte Flanken 76 auf. Die beiden Kupplungsteilen 16,17 haben jeweils etwa fünf bis elf gleichmäßig über ihren Umfang verteilte Mitnehmer 70 bzw. 75, wobei die Mitnehmer der einen Hälfte zwischen die der anderen passen.

In Fig.6 ist vereinfacht ein Schaltschema der Steuereinheit 21 dargestellt. Diese besteht allgemein aus einem Signalverarbeitungsteil 80, einem Logikteil 81, einer Ablaufsteuerung 82, einer Verstärkerstufe 83 und einem Ventil 84 für die Beaufschlagung des Einrückgliedes 20 bzw. 55.

Der Signalverarbeitungsteil 80 erhält von den Sensoren 22,23 Impulse, die den Zähnen bzw. Markierungen der abgetasteten Getriebeteile entsprechen: dem Sensor 22 die Keilnuten 12 in Fig.1 oder die Zähne 58 auf der Schiebemuffe in Fig.3 und dem Sensor 23 die Zähne des Antriebszahnrades 5 in Fig. 1 oder des Trieblings 47 in Fig.3. Diese Impulse werden in den Umsetzern 85,86 in Drehzahlsignale verwandelt, wobei in einem Rechenglied 87 noch eine Übersetzungskorrektur, in dem Fall vorgenommen werden kann, daß beispielsweise der Sensor 23 an einem Teil der Zwischenwelle 4 in Fig.1 angebracht wäre und dadurch das dazwischenliegende Übersetzungsverhältnis zu berücksichtigen ist. Die beiden Drehzahlsignale werden über Leitungen 88,89 einem Summierer 91 zugeführt, eines davon mit negativen Vorzeichen, sodaß in der Leitung 92 ein Drehzahldifferenz - Signal steht. Die Drehzahldifferenz ist wieder die Drehzahldifferenz zwischen den beiden Kupplungsteilen 16,17, die Dank dem Signalverarbeitungsteil 80 unabhängig von der Anordnung der Sensoren zu gewinnen ist. Sie wird bisweilen ebenfalls mit Schlupf bezeichnet.

Der Logikteil beginnt mit dem Eingang des Drehzahldifferenzsignales über die Leitung 92, dieses wird zwei Fensterkomparatoren 93,94 zugeführt, in deren jedem zwei Schwellenwerte, auf die später noch zurückzukommen ist, vorgegeben sind. Anstelle der beiden Fensterkomparatoren könnte im einfachsten Fall ein einziger oder auch ein Doppelfensterkomparator vorgesehen sein. Weiters wird das Schlupfsignal über ein Differenzierglied 96 zwei Beschleunigungskomparatoren 97 zugeführt. Die Ausgangssignale der Komparatoren 93,94,97 werden, nach UND-Verknüpfung je zweier zusammengehöriger Signale in den UND-Gliedern 98 und weiter Verknüpfung in einem ODER-Glied 99 der Eingangsseite des UND-Gliedes 95 zugeleitet. In dem beschriebenen Ausführungsbeispiel sind auch noch zwei weitere Komparatoren 100,101 vorgesehen die aber auch einfache Schwellenwertschalter sein können, die von den Leitungen 88 bzw. 89 über die Leitungen 90 die einzelnen Drehzahlsignale empfangen, um die Drehzahl des einen oder anderen Stranges zu überwachen und so Drehzahlüberschreitungen zu vermeiden. Die Ausgänge dieser Komparatoren 100,101 sind über ein UND-Glied 102 ebenfalls auf die Eingangsseite des UND-Gliedes 95 geschaltet.

Weiters werden zu Sicherheitszwecken der Eingangsseite des UND-Gliedes 95 noch ein von einem Bremslichtschalter 103 kommendes, bei 104 invertiertes Signal, und ein von einem Lenkwinkelsensor 105 über einen Schwellwertschalter oder Komparator 106 kommendes Lenkwinkelsignal zugeleitet. Dadurch kann bei Aufleuchten des Bremslichtes 103 und/oder bei Überschreiten eines bestimmten Lenkwinkels das UND-Glied 95 kein Ausgangssignal abgeben und die Kupplung kann nicht eingerückt werden.

Die Leitungen 90 führen weiters zu einem Fehlerkompensationsrechner 107, in dem die über einen längeren Zeitraum festgestellte Drehzahldifferenz ermittelt und daraus ein Korrektursignal errechnet wird, das über Leitungen 108 Schwellenwertstellern in den Komparatoren 93,94 zugeführt wird, die die vorgegebenen Schwellenwerte verstellen, sodaß sich Verschleißunterschiede beispielsweise der Fahrzeugbereifung nicht nachteilig auswirken können. Um dieses Korrektursignal nur bei Geradeausfahrt zu erzeugen, ist auch der Lenkwinkelsensor 105 mit dem Fehlerkompensationsrechner verbunden.

Die Ablaufsteuerung 82 schließt an den Ausgang des UND-Gliedes 95 an. Dessen Ausgangssignal ist positiv (bzw. high), wenn alle Signale auf der Eingangsseite es auch sind, was einen Befehl zum Einrücken der Kupplung bedeutet. Durch diesen Befehl wird ein Start-Stop-Oszillator 110 eingeschaltet, dessen Frequenz sehr niedrig ist, etwa 0,5 Hertz. Das entspricht einer Periode von zwei Sekunden, welche das zweite Zeitintervall T2 (siehe später) definiert. Die Ausgangsimpulse dieses Oszillators 110 werden zu einem monostabilen Schaltglied 111, beispielsweise einem Monoflop, geführt, dessen Ausgangssignal ein einziger Impuls einer bestimmten Länge (der des ersten Zeitintervalles T1, z.B. 1 Sekunde) ist und dann einem ODER-Glied 115 und über die Leitung 112 einem Impulstor 113 zugeführt wird. Dieses Impulstor 113, (es könnte auch ein Schalter oder ein UND-Glied sein), liefert dem zweiten monostabilen Schaltglied 114 ein Triggersignal, wenn während der Dauer T3 (drittes Zeitintervall) des Ausgangssignales des monostabilen Schaltgliedes 111 auch ein Ausgangssignal des Rückmelders 68 ansteht. Das monostabile Schaltglied 114 gibt einen relativ langen Ausgangsimpuls auf das ODER-Glied 115 ab, der dem dritten Zeitintervall T3 (siehe später, z.B. 10 Sekunden) entspricht. Das ODER-Glied 115 wird somit ein positives Ausgangssignal liefern, wenn entweder von 111 oder von 114 ein solches kommt (ein Einrückbefehl von 111 während des ersten Zeitintervalles, oder ein Festhaltebefehl von 114 während des dritten Zeitintervalles nach Vollzugsmeldung durch den Rückmelder 68) und dieses wird über die Verstärkerstufe 83 das Ventil 84 für das Einrückglied schalten, wobei das Ventil ein gewöhnliches Zweiwegventil sein kann. Wenn das Einrücken nicht gelingt, sorgt der Start-Stop-Oszilator 110 für Wiederholung nach Ablauf eines zweiten Zeitintervalles T2.

Die eben beschriebene Schaltung war nur ein Ausführungsbeispiel, bei dem viele Elemente oder Schaltungsteile durch äquivalente Elemente oder andere Schaltungsteile ersetzt werden können, ohne vom Wesen der Erfindung abzuweichen. Ebenso können die fest verbundenen Elemente durch einen Mikroprozessor ersetzt werden, der die Funktionsweise der Steuereinheit sequentiell nachbildet.

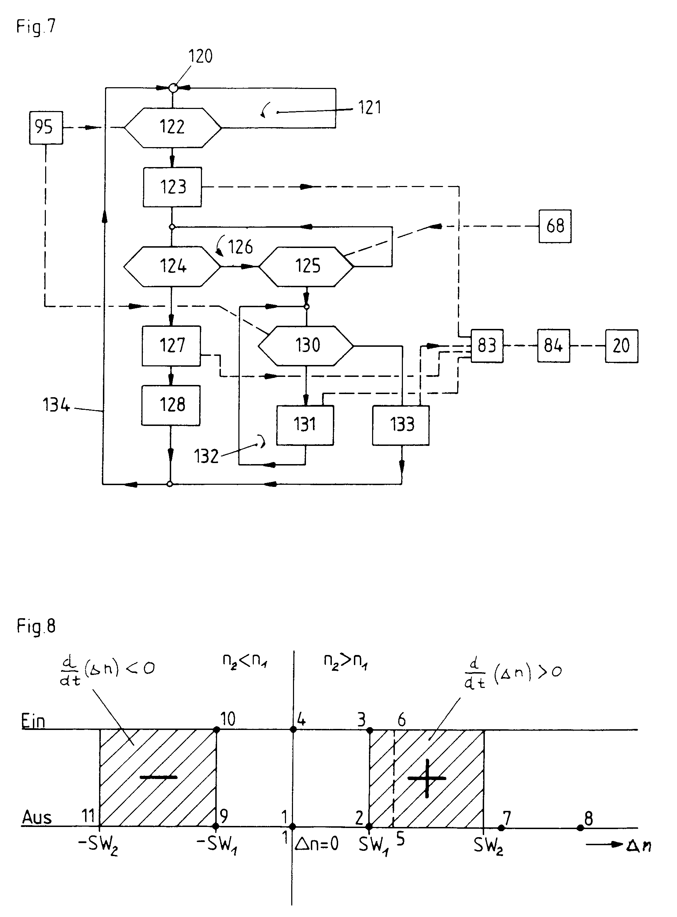

Deshalb wird für den Fall sequentieller Abarbeitung das Entscheidungsschaubild der Fig.7 beschrieben: Der Startpunkt ist mit 120 bezeichnet. Von diesem aus wird immer wieder abgefragt, ob am UND-Glied 95 ein positives (High) Ausgangssignal ansteht, was der Freigabe des Ablaufes entspricht, und womit die Ablaufsteuerung in Gang gesetzt wird. Solange das nicht der Fall ist, ist die Frage "IF Freigabe" in 122 negativ beantwortet und es wird die Warteschleife 121 durchlaufen. Dieser Zustand entspricht normaler Fahrt des Fahrzeuges auf befestigter Straße, bei der kein nennenswerter Radschlupf und damit auch keine nennenswerte Drehzahldifferenz zwischen den beiden Kupplungsteilen 16,17 auftritt. Sobald eine Drehzahldifferenz auftritt und die entsprechenden anderen Eingänge des UND-Gliedes 95 auch positiv sind, ist die Antwort in Feld 122 "ja" und es wird zu Feld 123 "Ansteuern" weitergegangen, womit dem Verstärker 83 der Befehl zum Ansteuern des Einrückgliedes 20 gegeben wird.

Sodann wird in Feld 124 ("IF tv > T1") regelmäßig abgefragt, ob das erste Zeitintervall (z.B. 1 Sekunde) bereits abgelaufen ist. Ist die Antwort negativ, geht es weiter zu Feld 126 ("IF Rückmeldung") und wenn eine solche auch nicht erfolgt ist, wieder zurück zu Feld 124, und so weiter in der Warteschleife 125, bis in einem der beiden Felder 124 oder 125 eine positive Antwort gegeben wird.

Wenn zuerst in Feld 124 eine positive Antwort gegeben wird, so ist das erste Zeitintervall T1 (z.B. eine Sekunde), das ist die Zeit während der das Einrückglied 20 betätigt wird, vergangen. Da unmittelbar vorher noch keine Rückmeldung von Sensor 68 in Feld 125 eingetroffen ist, bedeutet das, daß das Einrücken nicht gelungen ist. Längeres Versuchen ist zwecklos, deshalb wird gemäß Feld 127 die Ansteuerung des Stellgliedes 83 weggenommen, gemäß Feld 128 noch während des zweiten Zeitintervalles T2 (z.B. 2 Sekunden) gewartet und dann am linken Zweig 134 wieder zum Ausgangspunkt 120 zurückgekehrt.

Ist hingegen in Feld 124 die Antwort noch "nein", also das erste Zeitintervall noch nicht vergangen, und im Feld 125 die Rückmeldung vom Sensor 68 bereits angekommen (die Kupplung also eingerückt), so ist die Antwort dort "ja" und es wird in Feld 130 als nächster Schritt gefragt, ob der Ausgang des UND-Gliedes 95 noch ein positives Signal führt ("IF Freigabe") und ob das dritte Zeitintervall noch nicht vergangen ist. Ist die Antwort "ja", so wird gemäß Feld 131 die Ansteuerung gehalten und in der Schleife 132 wieder zum Feld 130 zurückgekehrt, bis das dritte Zeitintervall vergangen ist ("nein" in Feld 130). Das bedeutet, daß die Kupplung erfolgreich eingerückt ist und zehn Sekunden lang in eingerückter Stellung gehalten wurde und die Ansteuerung des Einrückgliedes 20 dann weggenommen wird, Feld 133 "Ansteuerung wegnehmen". Sodann wird am Weg 134 wieder zum Ausgangspunkt 120 zurückgekehrt und von dort aus die Warteschleife 121 umlaufen. Dabei sind die angegebenen Zeitintervalle nur Beispiele, die in Abhängigkeit von den mechanischen Gegebenheiten der Kraftübertragung zu wählen sind.

Fig.8 zeigt schließlich noch die Lage der Schwellen der Drehzahldifferenz und die damit zusammenhängenden Abläufe. Auf der Abszisse sind nach rechts positive Drehzahldifferenzwerte aufgetragen, also jene, bei denen die Drehzahl des treibenden Kupplungsteiles 16 höher als die des getriebenen Kupplungsteiles 17 ist. Negative Drehzahldifferenzwerte, das sind jene, bei denen die Drehzahl des treibenden Kupplungsteiles 16 niedrigerer als die des getriebenen Kupplungsteil 17, sind vom Ursprungspunkt nach links aufgetragen. Auf der Ordinate steht sinnbildlich "AUS" für die ausgerückte Kupplung, und "EIN" für Einrücken der Kupplung.

Bei langsamem Anstieg der Drehzahldifferenz wird die erste Schwelle SW1 erreicht, wodurch der Ablauf nach Fig.7 in Gang gesetzt und mit dem Einrücken der Kupplung begonnen wird. Gelingt das beim ersten Versuch, so wird entlang der Punkte 2,3 die Linie "EIN" erreicht. Wurden jedoch bei weiter steigender Drehzahldifferenz einige erfolglose Einkuppelversuche unternommen, so ist der Schwellenwert SW2 überschritten und ein Einkuppeln ist nicht mehr möglich. Auf diese Weise kann die Drehzahldifferenz entlang der Linien 2,5,7,8 weiter ansteigen. Dieses Ansteigen der Drehzahldifferenz wird der Fahrer als Ansteigen der Motordrehzahl wahrnehmen und das Fahrpedal zurücknehmen. Nun sinkt die Drehzahldifferenz von Punkt 8 über 7 wieder ab. Um jetzt ein Einkuppeln zwischen den beiden Schwellen SW2 und SW1 zu verhindern, weil dieses einen der Fahrtrichtung entgegengerichteten Stoß im Fahrzeug verursachen würde, wirken diese Schwellen nur bei steigender Drehzahldifferenz, bei sinkender werden sie übergangen und die Drehzahldifferenz passiert die Nulllinie bis zur negativen Schwelle -SW1 (die gleich der Schwelle SW1, aber negativ ist). Das Übergehen der Schwellen SW₂,SW₁ bei fallender Drehzahldifferenz wird, siehe Fig.6, durch das Differenzierglied 96, den mit dem Fensterkomparator 93 zusammenarbeitenden Beschleunigungskomparator 97 und das entsprechende UND-Glied 98 erreicht. Die Drehzahldifferenz fällt somit von Punkt 8 über 7,5,1 bis auf -SW₁, dann wird wieder der Einrückvorgang in der beschriebenen Weise gestartet. Wenn das Einrücken der Kupplung gelingt, erreicht man Punkt 10 und von dort, wie immer wenn die Kupplung eingerückt und daher die Drehzahldifferenz null ist, Punkt 4. Fällt sie aber so schnell ab oder scheitern auch hier Einrückversuche und es wird die negative Schwelle -SW2 unterschritten, ist auch wieder kein Einrücken der Kupplung möglich.

Durch das Zusammenwirken des Logikteiles 81 (Fig.6) der Steuereinrichtung mit den entsprechend Fig.8 geeignet gewählten Schwellen erreicht man bei allen denkbaren Fahrzuständen ein komfortables und schonendes Einrücken der Kupplung.

## Patentansprüche

1. Kupplung mit zwei formschlüssigen Kupplungsteilen (16,17) mit Mitnehmern (70,75;121,123), wobei
- der getriebene Kupplungsteil (17) mit einem ersten Radantriebsstrang (13,41) treibend verbunden ist, und
- der treibende Kupplungsteil (16) mit einem Hauptantriebsstrang und einem zweiten Radantriebsstrang (9,38) in Verbindung steht,
- die Kupplungsteile (16,17) Mitnehmer (70,75;121,123) mit in Umfangsrichtung wirkenden Flanken (71,76) aufweisen,
- eine Steuereinheit (21) eingangsseitig mit Drehzahlsensoren (22,23) an beiden Kupplungsteilen (16,17) bzw. den damit zusammenhängenden Strängen (3,4,5;10,13;6,9;3,4,30;39,41; 37,38;46,47,48,49;51;52) und ausgangsseitig mit einem einfachwirkenden Einrückglied (20,55) verbunden ist und bei Passieren vorgegebener Schwellenwerte der Drehzahldifferenz der Kupplungsteile (16,17) das Einrückglied (20,55) gegen die Kraft einer Feder (63) beaufschlagt.
**dadurch gekennzeichnet**, **daß**
- die Kraft der Feder (63) im Wesentlichen gleich der achsialen Reibungskraft zwischen den Mitnehmern (70,75;121,123) der Kupplungsteile (16,17) bei einem sehr geringen übertragenen Drehmoment an den Kupplungsteilen (16,17) ist, bei dessen Unterschreiten der verschiebbare Kupplungsteil sich selbsttätig ausrückt.

2. Kupplung nach Anspruch 1, die Kupplungsteile mit in achsialer Richtung vorstehenden Mitnehmern (70,75) aufweist, **dadurch gekennzeichnet**, daß sie zur Umfangsrichtung geneigte Anlaufflächen (74) aufweisen.

3. Kupplung nach Anspruch 1, **dadurch gekennzeichnet**, daß die Flanken (76) der Mitnehmer (75) von in Umfangsrichtung um einen sehr kleinen Winkel (77) einwärts geneigten Erzeugenden gebildet sind.

4. Kupplung nach Anspruch 1, **dadurch gekennzeichnet**, daß die Kupplungsteile (16,17) je ein Aussen- und ein passendes Innenprofil (121,123) aufweisen.

5. Kupplung nach Anspruch 1, **dadurch gekennzeichnet**, daß das Einrückglied (20) ein Zylinder (60) mit einer Kolbenstange (62) und einem Kolben (61) ist, der auf einer Seite mit Druckfluid beaufschlagbar ist und auf den auf der anderen Seite eine Druckfeder (63) wirkt.

6. Kupplung nach Anspruch 5, **dadurch gekennzeichnet**, daß die Kolbenstange (62) mit einer in den verschiebbaren Kupplungsteil eingreifenden Schaltgabel (19) fest verbunden und gemeinsam mit dieser achsparallel geführt ist.

7. Kupplung nach Anspruch 1, **dadurch gekennzeichnet**, daß die Steuereinheit (21) in Signalflußrichtung einen zwei Umsetzer (85,86) für die beiden Drehzahlsignale und einen Summierer (91) zur Bildung eines Drehzahldifferenzsignales aufweisenden Signalverarbeitungsteil (80), einen Logikteil (81), eine Ablaufsteuerung (82) und eine Verstärkerstufe (83) für das Ventil (84) umfaßt.

8. Kupplung nach Anspruch 7, **dadurch gekennzeichnet**, daß zwischen mindestens einem Umsetzer (85,86) und dem Summierer (91) ein Rechenglied (87) zur Übersetzungskorrektur angeordnet ist.

9. Kupplung nach Anspruch 7, **dadurch gekennzeichnet**, daß der Logikteil (81) mindestens einen ersten Komparator (93,94) zum Vergleich des Drehzahldifferenzsignales mit vorgegebenen Schwellenwerten (SW₁,SW₂,-SW₁,-SW₂) aufweist, dessen Ausgangssignal auf ein UND-Gatter (95) wirkt.

10. Kupplung nach Anspruch 9, **dadurch gekennzeichnet**, daß je ein Fensterkomparator (93,94) und je ein Beschleunigungskomparator (97) für positiven (93) und für negativen (94) Schlupf über je ein UND-Glied (98) und ein gemeinsames ODER-Glied (99) auf das UND-Gatter (95) wirken.

11. Kupplung nach Anspruch 9, **dadurch gekennzeichnet,** daß der Logikteil (81) weiters mindestens einen zweiten Komparator (100,101) zum Vergleich der Drehzahl mindestens einer der Kupplungsteilen (16,17) oder der damit verbundenen Stränge mit einem vorgegebenen Grenzwert aufweist, dessen Ausgangssignal auch dem UND-Gatter (95) zugeleitet wird.

12. Kupplung nach Anspruch 11, **dadurch gekennzeichnet**, daß mindestens ein weiterer Sensor (105) und ein dritter Schwellenwertschalter (106) vorgesehen ist, der auch auf das UND-Gatter (95) wirkt.

13. Kupplung nach Anspruch 7, **dadurch gekennzeichnet,** daß die Ablaufsteuerung (82) ein erstes monostabiles Schaltglied (111) aufweist, das die Dauer der Beaufschlagung des Einrückgliedes (20,55) bestimmt.

14. Kupplung nach Anspruch 13, **dadurch gekennzeichnet**, daß die Ablaufsteuerung (82) ein zweites monostabiles Schaltglied (114) aufweist, das eingangsseitig mit einem Rückmeldesensor (68) und ausgangsseitig mit einem ODER-Gatter (115) verbunden ist, mit dem auch der Ausgang des ersten monostabilen Schaltgliedes (111) verbunden ist.

15. Kupplung nach Anspruch 9 oder 10, **dadurch gekennzeichnet**, daß der mindestens eine erste Komparator (93,94) ein Komparator mit variablen Drehzahldifferenz - schwellenwerten (SW₁,SW₂,-SW₁,-SW₂) ist und dieser mit einem Fehlerkompensationsrechner (107) in Verbindung steht.

16. Verteilergetriebe für Kraftfahrzeuge mit Kupplung nach einem oder mehreren der Ansprüche 1 bis 15, bei dem der axial bewegliche Kupplungsteil (17) mit dem ersten Radantriebsstrang (13,41) und der nicht bewegliche Kupplungsteil (16) mit dem Hauptantriebsstrang (3,4) drehfest verbunden ist.

17. Achsdifferential für Kraftfahrzeuge mit Kupplung nach einem oder mehreren der Ansprüche 1 bis 15, bei dem der axial bewegliche Kupplungsteil (17) mit dem ersten Radantriebsstrang (51) und der nicht bewegliche Kupplungsteil mit dem Hauptantriebsstrang (46) drehfest verbunden ist.

18. Verfahren zum Schalten einer Kupplung nach einem oder mehreren der Ansprüche 1 bis 15, **gekennzeichnet** durch die folgenden Schritte:
a) Ermitteln eines Differenzsignales aus Drehzahlsignalen von zweien der drei Stränge(3,4,5;10,13;6,9;3,4,30;39,41;37,38; 46,47,48,49;51;52),
b) Einrücken der Kupplung (15) durch auf ein erstes Zeitintervall (T₁) begrenzte Beaufschlagung des Stellgliedes (20) bei Erreichen einer ersten definierten Drehzahldifferenzschwelle (SW₁),
c) Wiederholen der Beaufschlagung des Stellgliedes (20) nach einem zweiten Zeitintervall (T₂), wenn das erfolgte Einrücken der Kupplung nicht während des ersten Zeitintervalles (T₁) rückgemeldet wurde.

19. Verfahren nach Anspruch 18, **dadurch gekennzeichnet**, daß keine Beaufschlagung des Stellgliedes (20) erfolgt, wenn eine zweite definierte Schwelle (SW₂) überschritten ist.

20. Verfahren nach Anspruch 18, **dadurch gekennzeichnet**, daß nach erfolgtem Einrücken der Klauenkupplung (15) die Beaufschlagung des Stellgliedes (20,55) erst nach Ablauf eines dritten Zeitintervalles (T₃) beendet wird.

21. Verfahren nach Anspruch 19, **dadurch gekennzeichnet**, daß bei sinkender Drehzahldifferenz das Stellglied (20) bei passieren der negativen ersten Schwelle (-SW₁) beaufschlagt wird und bei passieren der negativen zweiten Schwelle (-SW₂) nicht mehr beaufschlagt wird.

22. Verfahren nach Anspruch 18, **dadurch gekennzeichnet**, daß bei nicht eingerückter Kupplung (15) aus den Drehzahlsignalen aus den Umsetzern (85,86) eine mittlere Differenzdrehzahl ermittelt wird und die Schwellen (SW₁,SW₂,-SW₁,-SW₂) mit dieser korrigiert werden.

23. Verfahren nach Anspruch 18, **dadurch gekennzeichnet**, daß die Beaufschlagung des Stellgliedes (20) nicht stattfinden kann, wenn mindestens ein weiterer Sensor (103,105) das Auftreten eines ungünstigen Fahrzustandes meldet.

## Claims

1. Clutch with two positively engaging clutch halves (16,17) with , wherein
- the driven clutch half (17) is drivingly connected to a first wheel drive train (13,41),
- the driving clutch half (16) is connected with a main drive train and with a second wheel drive train (9,38),
- the clutch halves (16,17) present engaging means (70,75;121,123) with contact surfaces (71,76) effective in circumferential direction
- a control unit (21) connected on the input side with rotational speed sensors (22,23) on both clutch halves (16,17) or on the drive trains (3,4,5; 10,13; 6,9; 3,4,30; 39,41; 37,38; 46,47,48,49; 51; 52) connected to them, and on the output side with a single acting actuator (20,55), the control unit (21) energizing the actuator (20,55) against the force of a spring (63) when predetermined threshold values of the rotating speed difference of the clutch halves (16,17) are crossed,
**characterized**, in that
- the force of the spring (63) is substantially equal to the axial frictional force between the dogs (70,75; 121,123) of the two clutch halves (16,17) for a very small torque transmitted between the two clutch halves (16,17), and that the shiftable coupling half disengages automatically when the torque falls thereunder.

2. Clutch according to claim 1, the coupling halves having axially prodruding engaging means (70,75), **characterized** in that these are provided with stop surfaces (74) inclined in circumferencial direction.

3. Clutch according to claim 1, **characterized** in that the contact surfaces (76) of the engaging means (75) are constituted by generatrixes which are inclined at a very small angle (77) inward in the circumferential direction.

4. Clutch as in claim 1, **characterized** in that the clutch halves (16,17) are provided with an external and a corresponding internal profile (121,123) each.

5. Clutch according to claim 1, **characterized** in that the actuator (20) is a cylinder (60) with a piston rod (65) and a piston (61) which can be subjected to pressure fluid on one side and upon which a compression spring (63) acts on the other side.

6. Clutch according to claim 5, **characterized** in that the piston rod (62) is rigidly connected to a shift fork (19) which engages the movable clutch half and is moved together with it parallel to the axis.

7. Clutch as in claim 1, **characterized** in that in the direction of signal flow the control unit (21) comprises a signal processing section (80) containing two converters (85,86) for the two rotational speed signals and an analog adder (91) for the elaboration of a rotating speed difference signal, a logic section (81), a process control section (82) and an amplification stage (83) for the valve (84).

8. Clutch according to claim 7, **characterized** in that a computing element (87) for transmission ratio correction is provided between at least one converter (85,86) and the analog adder (91).

9. Clutch according to claim 7, **characterized** in that the logic section (81) is provided with at least one first comparator (93,94) for the comparison of the rotating speed difference signal with predetermined rotating speed difference threshold values (SW1, SW2, -SW1, -SW2) the output signal of which acts upon an AND gate (95).

10. Clutch according to claim 9, **characterized** in that one window comparator (93,94) and one acceleration comparator (97) for positive (93) and for negative (94) slippage each act via an AND element (98) and a common OR element (99) upon the AND gate (95).

11. Clutch according to claim 9, **characterized** in that the logic section (81) is furthermore provided with at least one second comparator (100,101) to compare the rotational speed of at least one of the clutch halves (16,17) or of the trains connected thereto with a predetermined limit value the output signal of which is also transmitted to the AND gate (95).

12. Clutch according to claim 11, **characterized** in that at least one additional sensor (105) and a third threshold value switch (106) are provided to act also upon the AND gate (95).

13. Clutch as in claim 7, **characterized** in that the process control section (82) is provided with a first monostable switching element (111) which determines how long the actuator (20,55) is subjected to pressure.

14. Clutch according to claim 13, **characterized** in that the process control section (82) is provided with a second monostable switching element (114) which is connected on the input side to an confirmation sensor (68) and on the output to an OR gate (115) to which the output of the first monostable switching element (111) is also connected.

15. Clutch according to claims 9 or 10, **characterized** in that the at least one first comparator (93,94) is a comparator with variable rotating speed difference threshold values (SW1, SW2, -SW1, -SW2) and is connected to an error compensation computer (107).

16. Distributor gear-box for motor vehicles with a clutch according to one or more of the claims 1 to 15 in which the movable clutch half (17) is connected non-rotatably to the first wheel drive train (13,41) and the non-movable clutch half (16) to the main drive train (3,4).

17. Axle differential for motor vehicles with clutch as in one or several of the claims 1 to 15, wherein the axially mobile clutch half (17) is non-rotatably connected to the first wheel drive train (51) and the axially non-mobile clutch half to the main drive train (46).

18. Process for shifting a dog clutch as in or several of the claims 1 to 15, **characterized** by the following steps:
a. Detection of a rotating speed difference signal from rotational speed signals of two of the three trains (3,4,5;10,13;6,9;4,30;39,41;37,38;46,47,48,49;51;52),
b. Engagement of the clutch (15) through energizing the actuator (20) for a first time interval (T1) when a first defined rotating speed difference threshold (SW1) is crossed.
c. Repeating the energization of the actuator (20) after a second time interval (T2), if successful engagement of the dog clutch has not been confirmed during the first time interval (T1).

19. Process according to claim 18, **characterized** in that the actuator (20) is not energized, if a second defined rotating speed difference threshold (SW2) is exceeded.

20. Process according to claim 18, **characterized** in that after successful engagement of the clutch (15), energization of the actuator (20,55) ends only upon completion of a third time interval (T3).

21. Process according to claim 19, **characterized** in that when rotating speed difference decreases, the actuator (20) is energized when the negative first rotating speed difference threshold (-SW1) is crossed and is no longer energized when the second negative rotating speed difference threshold (-SW2) has been passed.

22. Process according to claim 18, **characterized** in that a mean differential rotational speed is detected from the rotational speed signals from the converters (85,86) when the clutch (15) is not engaged and in that the rotating speed difference thresholds (SW1,SW2,-SW1,-SW2) are corrected with these.

23. Process according to claim 18, **characterized** in that the actuator (20) cannot be energized, if at least one further sensor (103,105) signals the occurrence of an unfavorable travelling state.

## Revendications

1. Embrayage comportant deux parties d'embrayage à engagement (16,17) positif avec des griffes (70,75; 121,123), dont
- la partie d'embrayage menée (17) est accouplée à un premier train d'entraînement des roues (13,41), et
- la partie d'embrayage menante (16) est liée à un train d'entraînement principal et à un second train d'entraînement des roues (9,38),
- les parties d'embrayage (16,17) sont pourvues de griffes (70,75; 121,123) présentant des flancs (71,76) agissant en direction circonférentielle,
- un ensemble de commande (21) est relié de son coté d'entrée à des capteurs tachymétriques (22,23) pour les deux parties d'embrayage (16,17) oubien les trains respectifs (3,4,5; 10,13; 6,9; 3,4,30; 39,41; 37,38; 46,47,48,49; 51;52) reliés à ceux-ci, et relié de son coté de sortie à un actuateur à simple effet (20,55) et met en action l'actuateur (20,55) à l'encontre de la force d'un ressort (63) quand la différence des nombres de tours des parties d'embrayage (16,17) dépasse des seuils prédéterminés
**caractérisé** en ce que
la force du ressort (63) est sensiblement égale à la force axiale de friction entre les griffes (70,75; 121,123) des parties d'embrayage (16,17) quand le couple transmis par les parties d'embrayage (16,17) est très faible, la partie d'embrayage axialement déplaçable se dégageant automatiquement quand ce couple transmis est inférieur à celui-ci.

2. Embrayage selon la revendication 1 avec des parties d'embrayage pourvus de crabots (70,75) faisant saillie en direction axiale, **caractérisé** en ce que ils présentent des surfaces d'arrêt (74) inclinées en direction circonférentielle.

3. Embrayage selon la revendication 1 , **caractérisé** en ce que les flancs (76) des crabots (75) sont constitués par des génératrices inclinées vers l'intérieur par un angle (77) très faible

4. Embrayage selon la revendication 1 , **caractérisé** en ce que les parties d'embrayage (16,17) comportent un profilé extérieur et un profil intérieur à mésure.

5. Embrayage selon la revendication 1 , **caractérisé** en ce que l'actuateur (20) comporte un cylindre (60) avec une tige (62) et un piston (61) susceptible d'être attaqué par un fluid de pression d'un coté à l'encontre d'un ressort de compression disposé de l'autre coté du piston.

6. Embrayage selon la revendication 5 , **caractérisé** en ce que la tige (62) est reliée à demeure à une fourchette de commande (19) engageant la partie d'embrayage coulissante et est guidée ensemble avec la fourchette.

7. Embrayage selon la revendication 1 , **caractérisé** en ce que l'ensemble de commande (21) consiste, en direction du flux des signaux, en une section de traitement de signaux (80) comportant deux convertisseurs (85,86) pour les deux signaux tachymétriques et un additionneur (91) destiné à l'élaboration du signal de différence de nombre de tours, en une section logique (81), en une commande séquentielle (82) et en un étage d'amplification (83) pour le clapet (84).

8. Embrayage selon la revendication 7 , **caractérisé** en ce que entre au moins un des convertisseurs (85,86) et l'additionneur (91) est prévu une unité de calcul (87) destinée à la correction de taux de transmission.

9. Embrayage selon la revendication 7 , **caractérisé** en ce que la section logique (81) comporte au moins un premier comparateur (93,94) destiné à comparer le signal de différence de nombre de tours avec des seuils prédéterminés (SW1,SW2,-SW1, -SW2) et dont le signal de sortie est acheminé à un opérateur ET (95).

10. Embrayage selon la revendication 9 , **caractérisé** en ce que chaque fois un comparateur à fenêtre (93,94) et chaque fois un comparateur d'accélération (97) pour un glissement positif (93) et un glissement négatif (94) sont, chacun, reliés à l'opérateur ET (95) par l'intermédiaire d'un opérateur ET (98) et un opérateur OU (99) commun.

11. Embrayage selon la revendication 9 , **caractérisé** en ce que la section logique (81) comporte en outre au moins un second comparateur (100,101) destiné à comparer le nombre de tours d'au moins une des parties d'embrayage (16,17), ou des trains reliés à ceux-ci, avec une valeur limite prédéterminée, le signal de sortie de celui-ci étant aussi acheminé à un opérateur ET (95).

12. Embrayage selon la revendication 11, **caractérisé** en ce que au moins un autre capteur (105) et un troisième commutateur de valeur limite (106) sont prévus, le dernier étant à son tour relié à l'opérateur ET (95).

13. Embrayage selon la revendication 7 , **caractérisé** en ce que la commande séquentielle (82) comporte un premier commutateur monostable (111) déterminant la durée d'opération de l'actuateur (20,55).

14. Embrayage selon la revendication 13 , **caractérisé** en ce que la commande séquentielle (82) comporte un second commutateur monostable (114) relié du coté entrée à un capteur de réponse (68) et du coté sortie à un opérateur OU (115) auquel est aussi relié la sortie du premier commutateur monostable (111).

15. Embrayage selon l'une des revendications 9 ou 10, **caractérisé** en ce que l'au moins un premier comparateur (93, 94) est un comparateur dont les seuils de différence de nombre de tours (SW1,SW2,-SW1,-SW2) sont variables et en ce qu'il est relié à un calculateur de compensation (107).

16. Boite de transfert pour véhicules automobiles avec un embrayage selon une ou plusieurs des revendications 1 à 15, dans laquelle la partie d'embrayage (17) coulissante est accouplée au premier train d'entraînement de roues (51) et la partie d'embrayage (16) non coulissante est accouplée au train d'entraînement principal (3,4).

17. Différentiel d'essieu pour véhicules automobiles avec un embrayage selon une ou plusieurs des revendications 1 à 15, dans laquelle la partie d'embrayage (17) coulissante est accouplée au premier train d'entraînement de roues (51) et la partie d'embrayage (16) non coulissante est accouplée au train d'entraînement principal (46).

18. Procédé de commande d'un embrayage selon un ou plusieurs des revendications 1 à 15, **caractérisé** par les pas suivants:
a) Détermination d'un signal de différence à partir de signaux tachymetriques de deux des trois trains (3,4,5; 10,13; 6,9; 3,4,30; 39,41; 37,38; 46,47,48,49; 51;52),
b) Engagement de l'embrayage (15) par opération de l'actuateur (20) pendant un premier intervalle de temps (T1) limité, à l'atteinte d'un premier seuil de différence de nombre de tours (SW1) defini,
c) Répétition de l'opération de l'actuateur (20) après un second intervalle (T2), quand l'engagement réussi de l'embrayage n'a pas été rapporté pendant le premier intervalle de temps (T1).

19. Procédé selon la revendication 18, , **caractérisé** en ce que l'actuateur (20) n'est pas opéré quand un second seuil de différence de nombre de tours (SW2) defini est excedé.

20. Procédé selon la revendication 18, , **caractérisé** en ce que, l'engagement de l'embrayage accompli, l'opération de l'actuateur (20,55) n'est terminée qu'après un troisième intervalle de temps (T3).

21. Procédé selon la revendication 19, , **caractérisé** en ce que l'actuateur (20) est opéré au passage du premier seuil négatif (-SW1) et n'est plus opéré au passage du second seuil négatif (-SW2), quand la différence de nombre de tours diminue.

22. Procédé selon la revendication 18, , **caractérisé** en ce que une moyenne de différence de nombre de tours est calculée à partir des signaux tachymétriques des convertisseurs (85,86) quand l'embrayage (15) n'est pas engagé, et les seuils (SW1,SW2,-SW1,-SW2) sont corrigés avec ces moyennes.

23. Procédé selon la revendication 18, , **caractérisé** en ce que l'opération de l'actuateur (20) n'est pas possible quand au moins un autre capteur (103,105) signale un état de marche défavorable.
